# EUROPÄISCHE PATENTSCHRIFT

(11) **EP 3 321 643 B1**
(45) Veröffentlichungstag und Bekanntmachung des Hinweises auf die Patenterteilung: **11.03.2020**
(21) Anmeldenummer: 17200817.9
(22) Anmeldetag: 09.11.2017
(51) Int. Cl.: G01D 11/30, F16K 37/00, F15B 13/04

(54) **POSITIONSSENSOR UND STELLGERÄT MIT POSITIONSSENSOR**
POSITION SENSOR AND POSITIONING DEVICE WITH POSITION SENSOR
CAPTEUR DE POSITION ET APPAREIL DE RÉGLAGE DOTÉ DU CAPTEUR DE POSITION

(30) Priorität: 11.11.2016 DE 102016121671
(43) Veröffentlichungstag der Anmeldung: 16.05.2018
(73) Patentinhaber: Samson Aktiengesellschaft, 60314 Frankfurt am Main (DE)
(72) Erfinder: Mellinger, Christian, 63179 Obershausen (DE); Rausch, Sven, 61137 Schöneck (DE)
(74) Vertreter: Schmid, Nils T.F.

(56) Entgegenhaltungen:
- DE-A1- 4 009 007
- DE-C1- 10 007 968
- US-A- 4 319 188
- US-A1- 2003 086 470
- US-A1- 2016 245 674

## Beschreibung

Gegenstand der Erfindung ist ein Positionssensor für ein Stellgerät, wie ein Stellventil, einer prozesstechnischen Anlage, beispielsweise eine chemische Anlage, wie eine petrochemische Anlage, ein Kraftwerk, eine lebensmittelverarbeitende Anlage, wie eine Brauerei, oder dergleichen. Die Erfindung betrifft auch ein Stellgerät mit einem Positionssensor. Das Stellgerät kann beispielsweise ein Regelventil, ein Steuerventil oder ein Absperrventil, wie ein Notabschaltventil sein.

Ein Positionssensor ist beispielsweise von DE 38 44 020 A1 bekannt. Der bekannte Positionssensor kann eine geradlinige Bewegung einer Antriebsstange eines Stellgeräts, beispielsweise eines Stellventils, erfassen, um sie an eine zentrale Überwachungsstelle zu melden. Eine Linear- oder Winkelbewegung können laut DE 38 44 020 A1 mithilfe einer Amplituden- oder Widerstandsänderung infolge von relativ zueinander bewegtem Kern und Schleifer erfasst werden oder durch einen Hall-Sensor, einen kapazitiven Aufnehmer, einen Drehmelder oder ein Drehpotentiometer. Bei dem bekannten System erfolgt eine lineare Umwandlung des Wegs in eine elektrische Messgröße. Bei der konkreten Ausgestaltung gemäß DE 38 44 020 A1 greift der Positionssensor über einen Hebel, der drehfest mit einer Messwelle verbunden ist, einen linearen Ventilstangen-Weg ab und verursacht eine entsprechende Drehbewegung der Messwelle. Die Welle hat einen abschnittsweise halbkreisförmigen Querschnitt, auf deren Flachseite ein Hall-Sensor befestigt ist, der sich zwischen zwei an dem Gehäuse des Stellungsreglers ortsfesten Magnetpolen dreht. Mit dem Hall-Sensor kann die IST-Winkelstellung der Messwelle relativ zu dem Gehäuse erfasst werden. Bei dem in DE 38 44 020 A1 beschriebenen Positionsregler hat sich herausgestellt, dass aufgrund von Fertigungs-, Montage- und Lagerungs-Toleranzen die erreichbare Messgenauigkeit eingeschränkt ist. Die tatsächliche IST-Winkelstellung der Messwelle und daraus abgeleitet die IST-Stellung des Stellgeräts können mit dem bekannten Positionssensor nur relativ ungenau bestimmt werden. Ferner hat sich als nachteilig erwiesen, dass die Verkabelung des an der Welle befestigten Hall-Sensors infolge der Wellenbewegung unerwünschte Verschleißerscheinungen erfährt. Dieses ist besonders für sicherheitskritische Stellgeräte, wie Notabschaltventile, problematisch.

In US 2003/0086470 A1 ist ein Positionssensor für ein Stellgerät beschrieben, bei dem der Stellweg einer Ventil-Stellstange über einen Hebel abgegriffen und an eine Messwelle übermittelt wird. An der Messwelle sind zwei Magneten angeordnet, die auf Höhe der Rotationsachse der Messwelle ortsfest an dem Gehäuse des Positionssensors befestigt sind. Infolge der positionsfesten Anordnung des magnetoresistiven Sensorelements wird Verschleiß an der Sensor-Verkabelung vermieden. Bei dem Positionssensor gemäß US 2003/0086470 A1 treten jedoch ebenfalls Fertigungs-, Montage-, und Lagerungs-Toleranzen und infolgedessen Messfehler auf. Ferner wirken sich bisweilen stoß- oder schlagartige Stellgerätebewegungen, beispielsweise bei einem schnellen Abschalten, nachteilig auf die Magnetisierung der Permanentmagneten aus. Zur Erfassung einer IST-Winkelstellung für sicherheitskritische Stellgeräte, wie Notabschaltventile, eignet sich der Positionssensor gemäß US 2003/0086470 A1 daher nur bedingt.

Ein weiterer Positionssensor ist bekannt von DE 200 08 930 U1, bei dem eine Messwelle über einen Hebel eine Linearbewegung von einem Stellgerät, mit einem Stellventil, abgreifen kann. Stirnseitig an der Messwelle ist ein Permanentmagnet befestigt, dessen Rotationsbewegung von einem gehäusefesten GMR-Sensor erfasst wird. Infolge von Montage- Fertigungs- und/oder Lagerungstoleranzen der Messwelle können auch bei diesem Sensor Messfehler auftreten. Auch der von DE 200 08 930 U1 bekannte Positionssensor ist daher für sicherheitskritische Anwendungen von Stellgeräten, wie Notabschaltventile, eher ungeeignet.

US2016/0245674 A1 betrifft eine in einer Welle integrierte Winkelmesseinrichtung.

Es ist eine Aufgabe der Erfindung, die Nachteile des Stands der Technik zu überwinden, insbesondere einen Positionssensor bereitzustellen, der sich besonders gut für Stellgeräte für sicherheitskritische Anwendungen, wie Notabschaltventile, eignet und/oder der eine besonders präzise Erfassung von IST-Winkelstellungen, insbesondere kritischen IST-Winkelstellungen, mit hoher Genauigkeit gewährleisten kann.

Diese Aufgabe wird gelöst durch den Gegenstand des unabhängigen Anspruchs 1.

Gemäß einem Aspekt der Erfindung ist ein Positionssensor für ein Stellgerät, wie ein Stellventil, einer prozesstechnischen Anlage, beispielsweise eine chemische Anlage, ein Kraftwerk oder dergleichen, vorgesehen. Der erfindungsgemäße Positionssensor weist eine um weniger als 360° um eine Schwenkachse schwenkbare Messwelle und einen Winkelsensor zum Ermitteln einer IST-Wiiikelstellung der Messwelle relativ zu einer ortsfesten Referenzstelle auf. Der erfindungsgemäße Positionssensor kann ein Gehäuse aufweisen, wobei die ortsfeste Referenzstelle als gehäusefeste Referenzstelle realisiert sein kann. Die ortsfeste Referenzstelle kann beispielsweise eine Referenzstelle sein, die definiert ist durch das Gehäuse des Positionssensors oder ein daran befestigtes Teil. Die Messwelle kann dazu ausgelegt sein, mit einer Antriebsstange oder -welle des Stellgeräts vorzugsweise form- und/oder kraftschlüssig verbunden zu werden, um eine der Bewegungen der Stellantriebsstange oder -welle entsprechende Messwellenbewegung zu vollführen. Das Stellgerät kann ein Stellglied, wie ein Ventilglied, rotatorisch oder translatorisch betätigen. Vorzugsweise ist das Stellgerät ein Stellgerät mit Notabschaltfunktion, wie ein Not-Schließ-Ventil oder ein Not-Auf-Ventil. Für einen kleineren Messbereich und/oder eine höhere Messauflösung kann die Schwenkachse um weniger als 270°, weniger als 180°, insbesondere weniger als 135°, um die Schwenkachse schwenkbar sein. Es ist klar, dass die Schwenkachse der Rotationsachse der Messwelle entspricht und das die Messwelle zumindest abschnittsweise konzentrisch und koaxial zu der Schwenkachse ist.

Bei dem erfindungsgemäßen Positionssensor kann ein Winkelsensor vorzugsweise als AMR-Sensor oder GMR-Sensor realisiert sein. Andere Sensorarten, beispielsweise ein Hall-Sensor, sind ebenfalls denkbar. Der Winkelsensor ist dazu ausgelegt, eine IST-Winkelstellung der Messwelle innerhalb deren Messbereich zu erfassen, damit vorzugsweise eine Positionssensor- und/oder Stellungsregler-Elektronik zur Steuerung des Stellgeräts einen IST-Winkelstellungs-Wert erhält, den sie mit einem Soll-Winkelstellungs-Wert zum Zwecke einer Stellungsregelung gegenüberstellen kann. Vorzugsweise kann der Winkelsensor die IST-Winkelstellung der Messwelle im Wesentlichen kontinuierlich, beispielsweise mittels einer Analogmessung, erfassen. Der Winkelsensor soll dazu in der Lage sein, wenigstens fünf, wenigstens zehn, wenigstens 100 oder wenigstens 1000 unterschiedliche IST-Winkelstellungen zu erfassen, um eine präzise Steuerung oder Regelung des Stellgeräts auf Basis der IST-Winkelstellungs-Messdaten des Positionssensors durchführen zu können. Vorzugsweise soll der Winkelsensor für sich genommen (also theoretisch, im Neuzustand, vor dem Einbau in einen erfindungsgemäßen Positionssensor) eine Messgenauigkeit von ± 10° oder besser, ± 5° oder besser, vorzugsweise ± 2° oder besser, insbesondere ± 1° oder besser, besonders bevorzugt ± 0,5° oder besser für einen Messbereich von bis zu 90°, vorzugsweise bis zu 180°, insbesondere bis zu 360° zu leisten in der Lage sein.

Bei dem Positionssensor gemäß diesem Aspekt der Erfindung weist die Messwelle einen ersten Messwellenabschnitt, der sich koaxial zu der Schwenkachse in Axialrichtung erstreckt, vorzugsweise zumindest über das Doppelte, des insbesondere kleinsten und/oder durchschnittlichen Messwellendurchmesser des ersten Messwellenabschnitts. Der erste Messwellenabschnitt ist ausgelegt zum Einleiten einer Drehbewegung in die Messwelle entsprechend einer Stellbewegung der Stellantriebsstange oder -welle. Er kann über einen Kupplungsabschnitt verfügen, um die Drehbewegung direkt von einer Stellwelle oder indirekt von einer Stellwelle oder -Stange zu empfangen. Der erste Messwellenabschnitt kann beispielsweise ein vollzylindrischer Abschnitt der Messwelle sein, der innerhalb eines Kugellagers oder Gleitlagers relativ zu dem Gehäuse gelagert und beweglich ist. Der erste Messwellenabschnitt kann als Lagerabschnitt bezeichnet werden. Gleitlager sind aufgrund ihrer geringeren Lagertoleranz bevorzugt. Der erste Messwellenabschnitt ist vorzugsweise als zylindrischer Vollkörper realisiert.

Erfindungsgemäß weist die Messwelle des Positionssensors ferner einen zweiten, insbesondere zur Schwenksachse koaxialen, Messwellenabschnitt auf, der sich vorzugsweise in Axialrichtung erstreckt, wobei an dem zweiten vorzugsweise koaxialen Messwellenabschnitt eine messwellenfeste Winkelsensorkomponente, wie ein Permanentmagnet, des Winkelsensors befestigt ist. Der zweite Messwellenabschnitt kann beispielsweise ein vollzylindrischer Abschnitt der Messwelle sein, der innerhalb eines Kugellagers oder Gleitlagers relativ zu dem Gehäuse gelagert und beweglich ist. Die messwellenfeste Winkelsensorkomponente kann drehfest relativ zu der Messwelle an der Messwelle angeordnet sein. Es sei klar, dass ein Winkelsensor wenigstens zwei Winkelsensorkomponenten umfasst, von denen eine ortsfest, also beispielsweise gehäusefest, angeordnet ist, wobei die andere messwellenfest realisiert ist, sodass die Relativbewegung der Messwelle zu dem Referenzpunkt mit einer Relativbewegung der beiden Winkelsensorkomponenten relativ zueinander einhergeht, die der Winkelsensor erfasst, um die IST-Winlcelstellung der Messwelle relativ zu dem Referenzpunkt, also beispielsweise dem Gehäuse, zu ermitteln. Durch die Ausgestaltung einer Messwelle des Positionssensors gemäß diesem Aspekt der Erfindung können mithilfe des zweiten Messwellenabschnitts und der Anbringung der messwellenfesten Winkelsensorkomponente daran montagebedingte Toleranzen vermieden und fertigungs- und lagerungsbedingte Toleranzen weitgehend aufgehoben werden. Auf diese Weise kann mit dem erfindungsgemäßen Positionssensor eine gegenüber gebräuchlichen Positionssensoren wesentlich verbesserte Genauigkeit der Winkelmessung realisiert werden. Insbesondere bei der Verwendung eines AMR-Sensors eignet sich die erfindungsgemäße Ausgestaltung auch dafür, dass die Kontrolle eines Montage-Soll-Abstands zwischen dem Magnetfeldsensor und dem Magnet sich besonders einfach realisieren lässt. Überraschenderweise gestaltet sich bei der erfindungsgemäßen Ausgestaltung auch die Montage der Messwelle in dem Positionssensor besonders einfach, weil selbst größere, durch die Wellenmontage bedingte Toleranzen, ohne weiteres durch eine geeignete Anbringung der messwellenfesten Winkelsensorkomponente an dem zweiten Messwellenabschnitt ausgeglichen werden können. Eine möglichste exakt mittige Anordnung des AMR-Sensors auf der Schwenkachse lässt sich durch die erfindungsgemäße Ausgestaltung ebenfalls gut realisieren.

Ferner weist die Messwelle erfindungsgemäß wenigstens einen sich exzentrisch zur Schwenkachse in Axialrichtung ersteckenden Steg auf, der in Axialrichtung zwischen dem ersten Messwellenabschnitt und dem zweiten Messwellenabschnitt angeordnet ist und die Messwellenabschnitte drehfest verbindet. Der wenigstens eine Steg kann an den ersten Messwellenabschnitt vorzugsweise in Axialrichtung nahe oder an dessen vorzugsweise stellgerätekupplungsnahen Stirnende anschließen. Der wenigstens eine Steg kann an den zweiten Messwellenabschnitt vorzugsweise in Axialrichtung nahe oder an dessen vorzugsweise stellgerätekupplungsfernen Fußende anschließen. Die Messwelle kann beispielsweise genau einen, genau zwei oder genau drei exzentrische Stege aufweisen. Vorzugsweise weist die Messwelle an den ersten Messwellenabschnitt anschließend weniger als zehn, insbesondere weniger als fünf, vorzugsweise weniger als vier exzentrische Stege auf. Die mehreren Stege können im Umfangsrichtung verteilt, insbesondere mit gleichmäßigem Winkelabstand, angeordnet sein. Der Querschnitt des oder der exzentrischen Stege ist so bemessen und angeordnet, dass der gesamte Querschnitt des exzentrischen Steges relativ zu der Schwenkachse exzentrisch, insbesondere berührungsfrei in jeder Winkelstellung der Messwelle, relativ zu der Schwenkachse ist. Vorzugsweise definiert der wenigstens eine exzentrische Steg bzw. die mehreren exzentrischen Stege relativ zu der Schwenkachse der Messwelle einen Steg-Mindestabstand in Radialrichtung senkrecht zu der Schwenkachse von wenigstens 2 mm, insbesondere wenigstens 4 mm, vorzugsweise wenigstens 6 mm. Insbesondere sind die exzentrischen Stege relativ zu der Schwenkachse entlang des gesamten Winkelweges bzw. des Messweges der schwenkbaren Messwelle derart gestaltet, dass sie sich berührungsfrei relativ zu der Schwenkachse, konzentrisch um die Schwenkachse, bewegen können. Der Steg erstreckt sich über seine gesamte Länge im Wesentlichen parallel und quer versetzt zu der Axialrichtung der Messwelle. Bei dem erfindungsgemäßen Positionssensor weist die Messwelle einen in Axialrichtung zwischen den Messwellenabschnitten (dem ersten Messwellenabschnitt und dem zweiten Messwellenabschnitt) und in Radialrichtung auf Höhe der Schwenkachse angeordneten, vorzugsweise zylindrischen, Freiraum. In diesem Freiraum ist der Winkelsensor zumindest zum Teil angeordnet ist. Dabei lässt der wenigstens eine exzentrische Steg Zugriff auf den Freiraum in einer Radialrichtung quer zur Axialrichtung zu. Durch die Anzahl und die Größe in Umfangsrichtung der exzentrischen Stege in Relation zu der Form, insbesondere der umfänglichen Erstreckung der Öffnung(en) um die Schwenkachse, kann der maximale Schwenkbereich der Messwelle festgelegt werden. Die Messwelle lässt in Radialrichtung quer zu der Schwenkachse auf Höhe der Schwenkachse, vorzugsweise über die radiale Erstreckung des vorzugsweise vollzylindrischen ersten und/oder des zweiten Messwellenabschnitts, einen vorzugsweise zylindrischen Freiraum, in dem der Winkelsensor angeordnet ist. Der zumindest teilweise rotationskörperförmige, insbesondere zylindrische Freiraum beginnt vorzugsweise in Axialrichtung ab der Stirnseite des ersten Messwellenabschnitts. Vorzugsweise erstreckt sich der insbesondere zylindrische Freiraum in Radialrichtung vollumfänglich ab einschließlich der Schwenkachse in Radialrichtung bis zu dem wenigstens einen exzentrischen Steg. Der vorzugsweise zylindrische Freiraum kann durch eine Umhüllungskurve radial begrenzt sein, welche durch eine Rotation des wenigstens einen exzentrischen Stegs um die Schwenkachse definiert ist. Der bevorzugte Freiraum hat eine zumindest abschnittsweise Rotationsform, wobei abhängig von dem Messbereich bzw. dem Schwenkbereich der Messwelle der rotationskörperförmige Freiraum-Abschnitt sich in erster Linie in Umfangsrichtung über den Messbereich bzw. Schwenkbereich der schwenkbaren Messwelle zu erstrecken braucht.

Bei einer bevorzugten Ausführung der Erfindung weist der Positionssensor einen Sensorträger, wie eine Platine, auf, an dem eine, vorzugsweise relativ zu dem Gehäuse des Positionssensors, ortsfeste Winkelsensorkomponente des Winkelsensors befestigt ist. Diese Winkelsensorkomponente realisiert eine ortsfeste Referenzstelle für den Winkelsensor. Vorzugsweise erstreckt sich der Sensorträger quer zu der Schwenkachse und ragt in Radialrichtung in den Freiraum hinein. Alternativ oder zusätzlich weist der Sensorträger, vorzugsweise die Platine, wenigstens eine, vorzugsweise sichelförmige oder U-förmige, Öffnung auf, durch die der wenigstens eine exzentrische Steg in Axialrichtung hindurch ragt. Eine sichelförmige Öffnung umgibt die Schwenkachse in Umfangsrichtung um weniger als 180°. Eine U-förmige Öffnung umgibt die Schwenkachse in Umfangsrichtung über wenigstens 180°, jedoch weniger als 360°. Vorzugsweise ist die Anzahl der Öffnungen des Sensorträgers, der durch den wenigstens einen exzentrischen Steg ragt, kleiner oder gleich der Anzahl der sich exzentrisch erstreckenden Stege.

Gemäß einer Weiterbildung dieses Aspekts der Erfindung weist der Sensorträger eine Brücke oder eine Zunge auf, die von der wenigstens einen Öffnung zumindest teilweise begrenzt ist, wobei die Brücke oder Zunge die ortsfeste, insbesondere gehäusefeste, Winkelsensorkomponente, vorzugsweise auf der Schwenkachse der Messwelle angeordnet, trägt. Durch diese Ausgestaltung können sowohl die ortsfeste als auch die messwellenfeste Winkelsensorkomponente auf radialer Höhe der Schwenkachse, die Schwenkachse vorzugsweise schneidend, angeordnet sein, um eine besonders hohe Messgenauigkeit erreichen zu können. Die ortsfeste und/oder messwellenfeste Winkelsensorkomponente realisiert eine vorzugsweise rotationsasymmetrische Messreferenz, wie ein rotationsasymmetrisches Magnetfeld. Bei Verwendung beispielsweise von Permanentmagneten als eine der Winkelsensorkomponenten kann eine Anordnung des Pols exakt auf der Schwenkachse dazu führen, dass sich ein rotationssymmetrisches Magnetfeld ausbildet, dessen Rotationsbewegung durch einen Sensor nicht, oder zumindest nicht ohne weiteres, erfasst werden kann. Ein Sensorträger, der über eine Zunge verfügt, trägt die ortsfeste, insbesondere gehäusefeste, Winkelsensorkomponente auf einem sich halbinselartig in eine Öffnung erstreckenden Vorsprung, der auch als Nase bezeichnet sein kann. Bei einem Sensorträger mit Brücke sind in aller Regel wenigstens zwei die Brücke seitlich begrenzende Öffnungen vorgesehen, wobei die Öffnungen vorzugsweise sichelförmig und außenseitig von dem Sensorträger umgeben sind, sodass die die ortsfeste Winkelsensorkomponente tragende Brücke relativ zu einer ortsfesten Referenz bzw. vorzugsweise dem Gehäuse des Positionssensors relativ zu der Schwenkachse in Radialrichtung gegenüberliegende oder zumindest in Umfangsrichtung mehr als 90° versetzten Brückenenden befestigt ist. Ein Sensorträger mit Brücke kann eine besonders stabile Halterung der ortsfesten Winkelsensorkomponente gestatten. Im Vergleich zu einer Brücke erlaubt eine Zunge eine in Umfangsrichtung größere Öffnungsweite, durch die wenigstens ein exzentrischer Steg geführt werden kann, sodass ein größerer Montage- und/oder Messbereich verfügbar ist. Es sei klar, dass ein Sensorträger mit einer Brücke auch derart ausgebildet sein kann, dass eine insbesondere sternförmige Brücke mehr als zwei, beispielsweise drei, vier oder mehr, Brückenfüße hat, die einstückig in das umgebende Material des Sensorträgers übergehen oder daran befestigt sein können.

Gemäß einer bevorzugten Ausführung hat der Positionssensor einen IST-Winkelstellungs-Messbereich von wenigstens 30°, vorzugsweise wenigstens 60°, insbesondere wenigstens 80°, und/oder weniger als 360°, vorzugsweise höchstens 270°, insbesondere höchstens 180°, höchstens 120° oder höchstens 90°.

Gemäß einer bevorzugten Ausführung eines erfindungsgemäßen Positionssensors sind an der Messwelle, vorzugsweise an dem zweiten insbesondere koaxialen Messwellenabschnitt, eine messwellenfeste Positionsmelderkomponente eines Positionsmelders zum Erkennen, ob die IST-Winkelstellung der Messwelle einer vorbestimmten Winkelstellung entspricht, angeordnet. Ein Positionsmelder kann beispielsweise als Schalter, wie ein Endanschlag-Sensor, und/oder optisch, induktiv, kapazitivmechanisch oder auf andere Weise realisiert sein. Ein Positionsmelder ist dazu ausgestaltet, vorzugsweise digital, ein Positionsmeldesignal für den Positionssensor und/oder einen Stellungsregler zu generieren, das entweder angibt, dass die IST-Winkelstellung der Messwelle einer vorbestimmten Winkelstellung entspricht oder das angibt, dass die IST-Winkelstellung nicht der vorbestimmten Winkelstellung entspricht. Dadurch verfügt der Positionssensor sowohl über die Möglichkeit zur Ermittlung einer IST-Winkelstellung der Messwelle innerhalb eines relativ breiten IST-Winkelstellungs-Messbereichs, insbesondere mit einer wie oben beschriebenen vorgegebenen Auflösung, und zusätzlich einen Positionsmelder, der insbesondere sicherheitskritische Winkelstellungen eindeutig und mit äußerst geringem Messfehler erkennen kann.

Bei einer bevorzugten Ausführung der Erfindung sind gemäß einer ersten alternativen Ausgestaltung der erste koaxiale Messwellenabschnitt und der exzentrische Steg sowie gegebenenfalls der zweite, insbesondere zur Schwenkwellenachse koaxiale, Messwellenabschnitt einstückig realisiert. Gemäß einer zweiten alternativen Ausgestaltung sind der erste koaxiale Messwellenabschnitt, der zweite insbesondere koaxiale Messwellenabschnitt und/oder der wenigstens eine exzentrische Steg durch mehrere lösbar miteinander verbundene Einzelteile gebildet.

Gemäß einem anderen Aspekt der Erfindung, der mit den oben beschriebenen Ausgestaltungen kombinierbar ist, ist ein Positionssensor für ein Stellgerät, wie ein Stellventil, einer prozesstechnischen Anlage, wie eine chemische Anlage, ein Kraftwerk oder dergleichen, vorgesehen. Der Positionssensor gemäß dem anderen erfindungsgemäßen Aspekt hat eine um weniger als 360° um eine Schwenkachse schwenkbare Messwelle.

Gemäß diesem Aspekt der Erfindung umfasst der Positionssensor sowohl einen Winkelsensor zum Ermitteln einer IST-Winkelstellung der Messwelle relativ zu einer Referenzstelle, insbesondere zu einem Gehäuse des Positionssensors, der eine relativ zur Messwelle drehfeste Winkelsensorkomponente, wie einen Permanentmagnet, und eine relativ zur Referenzstelle, insbesondere zum Gehäuse, ortsfeste Winkelsensorkomponente, wie ein AMR-Sensor, aufweist, als auch wenigstens einen Positionsmelder zum Erkennen, ob die IST-Winlcelstellung der Messwelle einer vorbestimmten Winkelstellung entspricht, wobei der Positionsmelder eine relativ zur Messwelle drehfeste, insbesondere exzentrisch zu der Schwenkachse angeordnete, Positionsmelderkomponente, wie eine Schaltfahne, und eine relativ zur Referenzstelle, insbesondere zum Gehäuse, ortsfeste Positionsmelderkomponente, wie einen Schalter, aufweist. Der Winkelsensor ist vorzugsweise auf der Rotationsachse der Messwelle angeordnet. Durch die kombinierte Verwendung in einem einzigen Positionssensor von sowohl einem Winkelsensor als auch einem Positionsmelder kann auf einfache Weise sichergestellt werden, dass eine präzise Messung der Winkelstellung entlang des Messweges und vor allem bezüglich wenigstens einer vorbestimmten kritischen Position realisiert sein kann. Insbesondere gestattet der zusätzlich zu dem Winkelsensor vorgesehene wenigstens eine Positionsmelder eine sichere und präzise Erfassung von kritischen Stellpositonen, sodass nicht der Winkelsensor selbst hierfür besonders sicher und damit kostenintensiv ausgelegt zu werden braucht. Eventuelle Fertigungs- und Montage- und/oder Lagerungstoleranzen lassen sich bei einem Positionssensor gemäß diesem Aspekt der Erfindung beim Kalibrieren des Positionssensors zur Einstellung des wenigstens einen Positionsmelders berücksichtigen.

Gemäß einer bevorzugten Weiterbildung der Erfindung weist die Messwelle einen ersten Messwellenabschnitt, wie einen Lagerabschnitt, auf, der sich koaxial zur Schwenkachse in Axialrichtung erstreckt und weist wenigstens einen, an den ersten Messwellenabschnitt anschließenden, sich exzentrisch zur Schwenkachse in Axialrichtung erstreckenden, Steg auf. Dabei kann insbesondere die Messwelle in Axialrichtung auf Höhe des wenigstens einen Stegs und in Radialrichtung in Höhe der Schwenkachse einen vorzugsweise zylindrischen Freiraum lassen, in dem der Winkelsensor zumindest zum Teil angeordnet ist. Der Steg ist dazu ausgestaltet, einen radialen Zugriff von außen auf diesen Freiraum zuzulassen.

Gemäß einer weiteren Weiterbildung der Erfindung, bei dem die Messwelle einen Kupplungsabschnitt zum Einleiten einer Drehbewegung um die Schwenkachse der Messwelle aufweist, die mit einer vorzugsweise linearen oder rotatorischen Stellbewegung einer Stellantriebsstange oder -welle des Stellgeräts korrespondiert, ist die messwellenfeste Winkelsensorkomponente in Axialrichtung zwischen dem Kupplungsabschnitt und dem wenigstens einen Positionsmelder angeordnet. Durch eine solche Anordnung kann sichergestellt sein, dass die IST-Winkelstellungsmessung nicht durch eventuelle infolge des durch den Positionsmelder bei einem Kontakt etwa mit einer Schaltfahne auftretenden Drehmoments die Messung der IST-Winkelstellung verfälschen könnte.

Die Erfindung betrifft auch ein Stellgerät, wie ein Stellventil, insbesondere ein Not-Aus-Ventil, zum Einstellen einer Prozessfluidströmung einer prozesstechnischen Anlage, wie eine chemische Anlage, ein Kraftwerk, oder dergleichen, mit einem Positionssensor gemäß einem ersten und/oder zweiten Aspekt der Erfindung, dadurch gekennzeichnet, dass der Positionssensor dazu eingerichtet ist, dass die Messwelle eine Drehbewegung entsprechend bzw. korrespondierend zu einer Stellbewegung einer Stellantriebsstange oder -welle des Stellgeräts vollführt.

Gemäß einer Weiterbildung eines erfindungsgemäßen Stellgeräts umfasst der Positionssensor einen Positionsmelder, der eingerichtet ist zum Erkennen einer vorbestimmten Winkelstellung der Messwelle, die zu einer, vorzugsweise das Stellgerät vollständig öffnenden und(im Falle von wenigstens zwei Positionsmeldern)/oder vollständig schließenden Endstellung der Stellantriebsstange oder -welle korrespondiert.

Bevorzugte Ausgestaltungen der Erfindung sind in den Unteransprüchen angegeben.

Weitere Merkmale, Eigenschaften und Vorteile der Erfindung werden durch die folgende Beschreibung bevorzugter Ausführungen anhand der beiliegenden Zeichnungen deutlich, in denen zeigen:
- Fig. 1a: einen erfindungsgemäßen Positionssensor mit mehrteiliger Messwelle;
- Fig. 1b: eine Querschnittansicht entlang der Schnittlinie I-I gemäß Figur 1a;
- Fig. 1c: eine Detailansicht des Positionssensors gemäß Figur 1a, die den Winkelsensor und den Positionsmelder zeigt;
- Fig. 2a: eine alternative Ausgestaltung eines erfindungsgemäßen Positionssensors mit einstückigem Messwellenkörper; und
- Fig. 2b: eine Teilquerschnittsansicht des Positionssensors 1 gemäß Figur 2a entlang der Schnittlinie II-II.

Die in den Figuren dargestellten unterschiedlichen Ausführungen erfindungsgemäßer Positionssensoren sind zur einfachen Lesbarkeit bezüglich derselben oder ähnlicher Bauteile mit denselben oder ähnlichen Bezugszeichen versehen.

Im Allgemeinen wird im Folgenden der erfindungsgemäße Positionssensor mit dem Bezugszeichen 1 und dessen Messwelle mit dem Bezugszeichen 3 gekennzeichnet. Der Winkelsensor wird im Allgemeinen mit dem Bezugszeichen 5 und der bzw. die Positionsmelder mit den Bezugszeichen 7 und 9 bezeichnet.

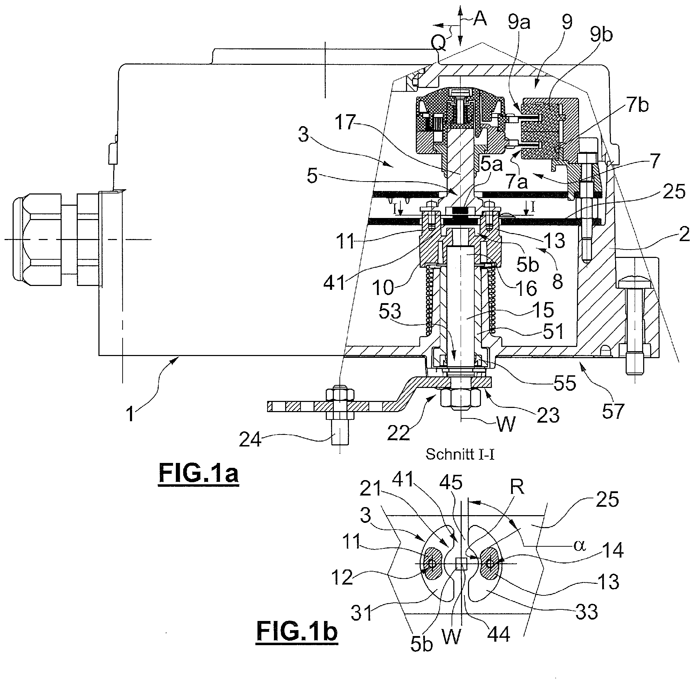

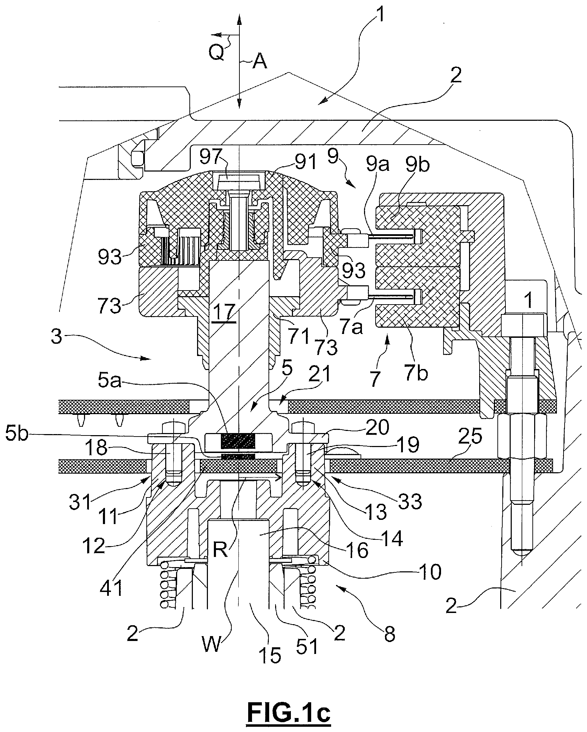

Der in den Figuren 1a, 1b und 1c dargestellte Positionssensor 1 hat eine Messwelle 3, die aus mehreren Einzelteilen zusammengesetzt ist.

Die in den folgenden Figuren in verschiedenen Ausgestaltungen dargestellten Positionssensoren 1 gehören zu der Gattung der Positionssensoren für Stellgeräte, wie Stellventile, insbesondere Not-Aus-Ventile, bei denen ein Stellventil über eine linearbewegliche Stellstange von einem Stellantrieb, beispielsweise einem pneumatischen oder elektrischen Stellantrieb, betätigt ist. Um die IST-Position des Stellventils relativ zu einem Stellventilsitz oder dergleichen zu erfassen, ist ein Hebel 23 einerseits drehfest an der Messwelle 3, also messwellenfest, angeordnet und bildet so einen Kupplungsabschnitt 22 am Fuß des ersten Messwellenabschnitts 15. Der Hebel 23 ist andererseits schwenkbar an der linearbeweglichen Stellstange des Stellgeräts angelenkt. Die lineare Stellbewegung der Stellstange des Stellgeräts wird über den Hebel 23 in eine Rotationsbewegung der Messwelle 3 um ihre Rotationsache W gewandelt. An der Messwelle 3 ist drehfest zu der Messwelle 3 eine messwellenfeste Winkelsensorkomponente 5a angeordnet. Wenn die Messwelle 3 sich insbesondere infolge einer Linearbewegung einer Stellstange um ihre Rotationsachse oder Schwenkachse W dreht, vollführt auch die messwellenfeste Winkelsensorkomponente eine Schwenkbewegung, vorzugsweise die gleiche Schwenkbewegung, um die Schwenkachse W.

Die Messwelle 3 ist über eine Gleitlagerung 51 relativ zu dem Gehäuse 2 des Positionssensors 1 drehbar gelagert und gehalten. Der erste Abschnitt 15 der Messwelle erstreckt sich von der Kupplungsstelle 22 in das Gehäuse 2 abschnittsweise durch die Gleitlagerung 51. An der Stirnseite des ersten Messwellenabschnitts 15 ist der Schwenkhebel 23 drehfest, beispielsweise über eine Keilwellenverbindung angekoppelt. An dem stellseitigen bzw. hebelseitigen Ausgang 53 des Gehäuses 2 ragt der erste Messwellenabschnitt aus dem Gehäuse 2 des Positionssensors 1 hinaus. An der Öffnung 53 des Gehäuses 2 kann eine Dichtung 55 zum Abdichten des Gehäuses 2 relativ zu der Messwelle 3 vorgesehen sein.

Wenn der Hebel 23 eine Auf- oder Ab-Bewegung der Stellstange des Stellgeräts mithilfe des Stifts 24 folgt, dreht sich der Hebel 23 mit dem Stift 24 um die Schwenkachse W und treibt die Messwelle 3 zu einer entsprechenden Rotationsbewegung an.

Am Fuß 16 des ersten Messwellenabschnitts 15 ist drehfest ein Kronenflansch 10 befestigt, sodass dieser jeder Drehbewegung des ersten Messwellenabschnitts 15 mitdrehend folgt. Der Kronenflansch 10 hat einen im Wesentlichen zylindrischen, vorzugsweise vollumfänglichen Halteabschnitt, in dem innenseitig eine drehfeste Verbindung gegenüber dem Fuß 16 des ersten Messwellenabschnitts 15 vorgesehen ist. Vorzugsweise ist der Fuß 16 des ersten Messwellenabschnitts 15 durch eine Pressverbindung, eine Klebeverbindung, eine Schraubverbindung oder dergleichen, mit dem Kronenflansch 10 verbunden. Vorzugsweise ist zwischen dem Kronenflansch 10 und dem Gehäuse ein elastisches Teil, wie eine Druckfeder, vorgesehen, sodass eine Druckkraft auf den Kronenflansch einwirkt. Die Druckkraft kann über die Befestigung relativ zu dem ersten Messwellenabschnitt 15 in diesen übertragen werden, um den ersten Messwellenabschnitt 15 bzw. die Welle 3 relativ zu der Öffnung 53 des Gehäuses 2 zu verankern und in Axialrichtung A zu halten.

Der Kronenflansch umfasst ferner in der in Figur 1a und 1c dargestellten Ausführung diametral gegenüberliegende Stegsäulen 11, 13, welche sich in Axialrichtung A parallel zu der Schwenkachse W durch die Platine 25 erstrecken. Die Säulen 11 und 13 sind im Wesentlichen spiegelsymmetrisch relativ zueinander ausgebildet und weisen etwa in ihrer Querschnittsmitte eine zu der Schwenkachse parallele Bohrung 12 bzw. 14 auf. Die exzentrischen Stegsäulen 11, 13 oder Stege haben, wie in Figur 1b gut zu erkennen, einen radialen Abstand R zu der Schwenkachse W. Sie bilden einen Mittelabschnitt 8 der Messwelle 3, der die beiden kupplungsnahen (15) und kupplungsfernen (17) Messwellenabschnitte verbindet.

Zwischen den gegenüberliegenden Stegen 11 und 13 ist also ein dem zweifachen Radius R entsprechender freier Durchmesser vorgesehen, sodass ein im Wesentlichen zylindrischer Minmalfreiraum 21 unabhängig von der Winkelstellung der Messwelle 3 selbst bei einer Drehung der Messwelle 3 um 180° oder 360° stets freigelassen wird. Um den stets vorhandenen zylindrischen Minimalfreiraum 21 herum kann weiterer, unmittelbar angrenzender Raum abhängig von der Form der Stege 11, 13 und der Wellenabschnitte 15, 17 freigelassen werden. Der Freiraum 21, der sich in Radialrichtung zwischen den beiden Stegen 11 und 13 erstreckt und der sich in Axialrichtung A zwischen dem ersten Wellenabschnitt 15 und dem zweiten Wellenabschnitt 17 erstreckt, ist im Wesentlichen zylindrisch. In dem Freiraum 21 angeordnet ist gegenüber einer Referenzstelle bzw. relativ zu dem Gehäuse 2 eine Winkelsensorkomponente 5b ortsfest angeordnet.

Die ortsfeste Halterung der stationären Winkelsensorkomponente 5b ist gemäß Figur 1b dadurch realisiert, dass sie auf einer Brücke 41 der Platine 25 angeordnet ist. Die Platine 25 ist an dem Gehäuse 2 fest angeschraubt. Die Platine 25 ist einstückig mit dem Material der Brücke 41 gebildet. Die Brücke 41 erstreckt sich durch den Freiraum 21. Insbesondere erstreckt sich die Brücke 41 quer zu der Axialrichtung A ausgehend von einem ersten Fuß 44 bis hin zu einem gegenüberliegenden zweiten Fuß 45, die beide einstückig als Teil der Platine 25 gebildet sind. Die Platine bildet zwei sichelförmige Öffnungen 31, 33, durch die jeweils einer der Stege 11 oder 13 in Axialrichtung A hindurch ragen. Die Querschnittsbreite der Stege 11 und 13 sowie die Größe der Öffnungen 31, 33 bestimmen den maximalen Schwenkbereich und folglich den maximalen Messbereich.

Die beiden exzentrischen Stege 11 und 13 können sich theoretisch bis zu einem Anschlag gegen die Brücke 41 um die Schwenkachse W im Uhrzeigersinn oder entgegen dem Uhrzeigersinn um einen Winkel α von etwa 60° bewegen. Der gesamte Messbereich der Messwelle 3 gemäß Figur 1a bis 1c beträgt das Doppelte des Winkels α, also etwa 120°. Vorzugsweise ist der von dem Winkelsensor 5 messbare Weg genauso groß oder größer als der rotatorische Bewegungsfreiraum der Messwelle 3. Auf der Brücke 41 ist zentral auf der Schwenkachse W der Messwelle 3 eine ortsfeste Winkelsensorkomponente 5b befestigt. Im Rahmen einer Kalibrierung des Positionssensors 1 ist es möglich, nach der Montage der Messwelle 3 und der Festlegung ihrer rotatorischen Lagerung relativ zu dem Gehäuse 2 des Positionssensors 1, die ortsfeste Winkelsensorkomponente 5b präzise zu positionieren und auszurichten.

Figur 1c zeigt im Detail den mittleren Abschnitt der Messwelle 3, welcher durch die Platine 25 hindurch ragt. Am stirnseitigen Ende des Kronenflansches, der die exzentrischen Stege 11 und 13 realisiert, ist flanschartig über Montageschrauben 18, 19 ein fußseitiger Befestigungsflansch 20 des zweiten Wellenabschnitts 17 befestigt. Zwischen dem fußseitigen Flansch 20 des zweiten Wellenabschnitts 17, den beiden diametral gegenüberliegenden exzentrischen Stegen 11 und 13 und dem an dem Ende 16 des ersten Wellenabschnitts 15 sitzenden zentralen Teil des Kronenflansches 10 ist der axiale und achsennahe Freiraum 21 freigegeben, in dem der vollständige Winkelsensor 5 angeordnet ist. Wie oben beschrieben ragt eine Brücke 41 der Platine 25, die gehäusefest montiert ist, zwischen den exzentrischen Stegen 11 und 13 speichenartig quer durch die Messwelle 3 hindurch und trägt auf radialer Höhe der Schwenkachse W die ortsfeste Winkelsensorkomponente 5b. In Axialrichtung A gegenüberliegend zu der ortsfesten Winkelsensorkomponente 5b ist am Fußende des zweiten Messwellenabschnitts 17 eine messwellenfeste Winkelsensorkomponente 5a befestigt. Die messwellenfeste Winkelsensorkomponente 5a ist nahe der Achse W angeordnet. Die messwellenfeste Winkelsensorkomponente ist an einem Abschnitt der Messwelle 3 angeordnet, der in Bezug auf den Hebel 23 rückseitig relativ zu der Platine 25 bezüglich der Gehäusevorderseite 57 angeordnet ist. Die Messwelle 3 tritt durch Öffnungen 31, 33 der Platine 25 hindurch.

Der erste Messwellenabschnitt 15 ist zwischen der Platine 25 und der Kupplung 22 zu dem Hebel 23 angeordnet und der zweite Messwellenabschnitt 17 ist relativ dazu rückseitig zu der Platine 25 angeordnet. Am fußseitigen Ende des zweiten Messwellenabschnitts 17 ist die messwellenfeste Winkelsensorkomponente 5a in Richtung auf das stirnseitige Ende 16 des ersten Messwellenabschnitts 5 zeigend angeordnet.

Die ortsfeste Winkelsensorkomponente 5b ist vorzugsweise auf der Seite der Platine angeordnet, die auf die messwellenfeste Winkelsensorkomponente 5a gerichtet ist, um den axialen Abstand zwischen den Komponenten 5a und 5b des Winkelsensors 5 gering zu halten und um gut messen zu können.

Durch die Montage des Flanschfußes 20 des zweiten Messwellenabschnitts 17 können Toleranzen des ersten Messwellenabschnitts, beispielsweise infolge der Lagerung 51 oder aufgrund von Fertigungsungenauigkeiten derart ausgeglichen werden, dass der zweite Messwellenabschnitt 17 möglichst exakt konzentrisch und koaxial zu der Rotationsachse W liegt. Bezüglich der Rotationsachse W der Messwelle 3 kann (alternativ oder zusätzlich) eine kalibrierende, koaxiale Ausrichtung der messwellenfesten Winkelsensorkomponente 5a hochpräzise erfolgen. Der erfindungsgemäße Positionssensor 1 erlaubt somit bei der in den Figuren 1a bis 1c dargestellten Ausführung eine besonders präzise Montage der beiden Winkelsensorkomponenten 5a und 5b relativ zu der Schwenkachse W und relativ zueinander vorzunehmen, um eine sehr hohe Winkelmessgenauigkeit erreichen zu können.

Der mehrteilige Aufbau der Messwelle mit einem ersten Messwellenabschnitt 15, einen zweiten Messwellenabschnitt 17 und einem dazwischen vorgesehenen dritten Messwellenabschnitt 8, die aneinander montiert werden, erlaubt eine besonders kompakte Bauweise eines Positionssensors 1 bei gleichzeitig verbesserter Möglichkeit, die Winkelsensorkomponenten 5a und 5b zueinander auszurichten.

Bezüglich dem Drehmoment eintragenden Teil, also dem Hebel 23, am entfernten Ende des zweiten Messwellenabschnitts 17, sind zwei unterschiedliche und unabhängig voneinander einstellbare und wirkende messwellenfeste Positionsmelderkomponenten in Form von Schaltfahnen 7a, 9a angeordnet.

Das stirnseitige Ende des zweiten Messwellenabschnitts 17 hat vorzugsweise zumindest einen unrunden (Nocken-) Abschnitt oder keilförmigen Abschnitt zum drehfesten Anordnen der Halterungen 71, 91 der Schaltfahnen 7a und 9a. Die Schaltfahnen 7a, 9a können über lösbar befestigbare Stellringe 73, 93 im gelösten Zustand drehbar relativ zu dem zweiten Messwellenabschnitt 17 bzw. der Messwelle 3 angeordnet sein. Eine Sicherung zum drehfesten Halten der Stellringe 73, 93 relativ zu der Messwelle 3 ist bei der in Figur 1c dargestellten Ausführung durch die Befestigungsschraube 97 realisiert, die eine kraftschlüssige, feste Verbindung der Stellringe 73, 93, welche jeweils eine der Messfahnen 7a, 9a trägt, realisiert. Die Arretierschraube 97 kann gelöst werden, um eine Drehung der Einstellringe 73 und 93 relativ zu der Messwelle 3 zu erlauben. Auf diese Weise können die Messfahnen 7a und 9a (oder beliebige andere messwellenfeste Positionsmelderkomponenten) in eine vorbestimmte Winkelposition gebracht werden, die insbesondere zu einer kritischen Winkelstellung der Messwelle 3 bzw. einer kritischen Stellung einer der mit der Messwelle 3 kinematisch verbundene Stellstange der Stellgerät korrespondiert. Auf diese Weise kann eine einfache Anpassung eines Positionssensors 1 an unterschiedliche Stellgeräte realisiert werden. Wenn die Arretierschraube 97 fest angezogen wird, hält sie die an den Positionsmelderhalterungen 71 und 91 gelagerten Stellringe 73, 93 messwellenfest, also drehfest, gegenüber der Messwelle 3.

Jede der messwellenfesten Positionsmelderkomponenten 7a bzw. 9a, die vorliegend exemplarisch als Positionsmelderfahnen realisiert sind, interagieren mit einer gehäusefesten Positionsmelderkomponente 7b bzw. 9b, welche ortsfest an dem Gehäuse 2 befestigt ist, um eine Referenz zu bilden. Jede ortsfeste Positionsmelderkomponente 7b bzw. 9b ist dazu ausgestaltet, zu erkennen, ob die ihr zugeordnete Messfahne 7a oder 9a eine vorbestimmte IST-Winkelstellung erreicht. Beispielsweise kann eine ortsfeste Positionsmelderkomponente 9b einen elektrischen, elektromagnetischen, optischen oder mechanischen Schalter aufweisen, der durch die Schaltfahne 9a beim Erreichen einer bestimmten IST-Winkelstellung betätigt wird, um ein Signal eines Positionssensors 1 oder einer Stellungsreglerelektronik zu generieren, welches signalisiert, dass die Messwelle 3 bzw. eine kinematisch mit der Messwelle 3 in Verbindung stehende Stellstange oder Stellwelle eine bestimmte Stellung erreicht hat. Dies kann beispielsweise eine voll geöffnete oder voll geschlossene Endstellung der Stellstange oder der Stellwelle insbesondere mit einem daran befestigten Ventilglied sein.

Beispielsweise kann einer der Positionsmelder, beispielsweise der untere Positionsmelder 7, beim Erreichen einer unteren, voll geschlossenen Ventilstellung dies melden. Der obere Positionsmelder 9 kann beispielsweis dazu ausgelegt sein, eine geöffnete, insbesondere vollständig geöffnete, Ventilstellung zu erkennen und zu signalisieren. Solange die Stellstange sich in dem Bereich zwischen den vorbestimmten Stellungen befindet, die zu Erkennen die Positionsmelder 7, 9 eingerichtet sind, so erkennen die Positionsmelder 7 bzw. 9 ausschließlich, dass keine der vorbestimmten Winkelstellung erreicht ist. Die Positionsmelder 7 und 9 sind vorzugsweise derart, dass sie eine IST-Winkelstellung nicht messen, sondern nur eine einzige vorbestimmte Winkelstellung erkennen können. Solche einfachen Sensoren haben sich als besonders gut geeignet für sicherheitskritische Anwendungen herausgestellt, weil sie aufgrund ihrer Einfachheit wenig fehleranfällig sind.

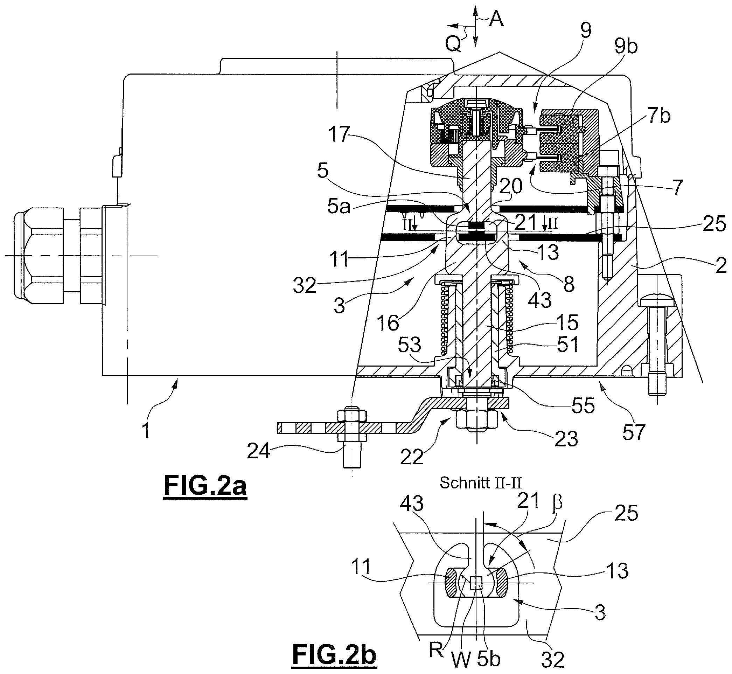

Die Figuren 2a und 2b zeigen eine zweite Ausführung eines erfindungsgemäßen Positionssensors 1, der weitgehend identisch mit dem oben im Hinblick auf die Figuren 1a bis 1c beschriebenen Positionssensor realisiert ist, weshalb dieselben Bezugszeichen verwendet sind. Im Hinblick auf die beschriebenen Funktionen des Positionssensors 1, insbesondere des Winkelsensors 5 und des Positionsmelders 7, 9, einschließlich deren Anordnung relativ zu der Messwelle 3, wird insoweit auf die obigen Ausführungen verwiesen. Gleiches gilt für die Anordnung der Messwelle 3 relativ zum Gehäuse und die kinematische Kopplung an einer Stellstange.

Im Unterschied zu dem zuvor beschriebenen Positionssensor ist die durch die Platine 25 ragende Messwelle 3 mit einstückigem Messwellenkörper gebildet. Ein einziges Materialteil, das beispielsweise geschmiedet, gefräst und/oder gedreht sein kann, realisiert einstückig sowohl den ersten Messwellenabschnitt 15, den zweiten Messwellenabschnitt 8, der sich in einzelne exzentrische Stege 11, 13 unterteilt und durch eine Öffnung 32 der Platine 25 ragt, wie auch den zweiten Messwellenabschnitt 17, der bezüglich der Gehäusevorderseite 57 hinter der Platine 25 angeordnet ist und die messwellenfeste Winkelsensorkomponente 5a wie auch die messwellenfesten Positionsmelderkomponenten 7a, 9a trägt. Eine einstückige Messwelle 3 bietet die Vorteile einer möglichst präzisen Fertigung, beispielsweise durch Drehen, derart, dass der erste Messwellenabschnitt 15 und der zweite Messwellenabschnitt 17 besonders hohen Präzisionsanforderungen im Hinblick auf deren Koaxialität und Konzentrizität erfüllen können.

Der Mittelteil 8 oder der mittlere Abschnitt ist gebildet durch eine Gabelung der einstückigen Messwelle 3, sodass im axialen, zentralen Bereich ein Freiraum 21 bleibt, der beispielsweise durch eine Fräsung radial quer durch die Messwelle eingebracht werden kann.

Es ist auch denkbar, dass anstelle von zwei exzentrischen Stegen 11 und 13 eine Messwelle 3 nur einen einzigen exzentrischen Steg (nicht dargestellt) aufweist, der nockenartig relativ zu dem ersten Messwellenabschnitt 15 und dem zweiten Messwellenabschnitt 17 exzentrisch hervorsteht und sich um die Schwenkachse W exzentrisch um den Freiraum 21 bewegt, der sich in Axialrichtung A zwischen dem Stirnende 16 des ersten Messwellenabschnitts 15 und dem Fußende 20 des zweiten Messwellenabschnitts 17 erstreckt. In dem Freiraum 21 ist der Winkelsensor 5 vollständig angeordnet.

Wie besonders gut in der Schnittansicht gemäß Figur 2b zu erkennen, ist die ortsfeste Winkelsensorkomponente 5b auf einem halbinselartigen Zungenabschnitt 43 der Platine 25 angeordnet. Die Öffnung 32 der Platine 25 ist U-förmig und derart bemessen, dass die einstückige Messwelle 3 in Axialrichtung durch die Öffnung 32 der Platine 25 zur Montage eingesteckt werden kann. Bei der dargestellten Ausführung können sich die beiden exzentrischen Stege 11, 13 höchstens um einen Winkel β, der etwa 60° beträgt, drehen, bis einer der Stege 11 oder 13 an die Zunge 43 stößt. Der gesamte Messbereich beträgt auch hier etwa das Doppelte des Winkels β und somit etwa 120°. Der mögliche Messwinkel kann (bei beiden Messwellen-Ausführungen) dadurch erhöht werden, dass eine U-förmige Öffnung 32 gebildet wird, die sich in Umfangsrichtung möglichst weit, also über mindestens 180°, über mindestens 270° oder sogar über mindestens 330°, relativ zu der Schwenkachse W erstreckt. Gleichzeitig kann der maximale Messbereich vergrößert werden, indem die Anzahl der exzentrischen Stege verringert bzw. die Erstreckung der oder des exzentrischen Steges in Umfangsrichtung möglichst gering gehalten wird. Beispielsweise könnte in dem in Figur 2b dargestellten U-förmigen Loch 32 der Platine 25 einer Messwelle 3, die nur einen exzentrischen Steg (etwa den Steg 11) aufweist, ein maximaler Drehbereich bereitgestellt werden, der sich von einer Bewegung des Steges 11 im bzw. gegen den Uhrzeigersinn von einem gegenuhrzeigerwärtigen Anschlag an dem Zungensteg 43 bis hin zu dem uhrzeigerwärtigen Anschlag an die Zunge 43 ergibt und der größer als 35°, vorzugsweise größer als 180°, ist.

Bei beiden Ausführungen gemäß Figur 1b oder 2b ist die Breite der Öffnung 31, 32 oder 33 in Radialrichtung Q quer zu der Schwenkachse W notwendigerweise größer als die radiale Breite der Stege 11, 13, sodass diese sich ungehindert in der Öffnung bis zu dem theoretischen Anschlag an der Zunge 43 oder der Brücke 41 drehen können. Die Öffnung kann in Radialrichtung Q wesentlich größer sein als die Stege 11, 13, um den Welleneinbau zu vereinfachen. Bei der Ausführung gemäß den Figuren 1a bis 1c können die Stege vorzugsweise in Radialrichtung etwa 0,3 cm bis 0,7 cm, vorzugsweise etwa 0,5 cm, breit sein. Bei einer einstückigen Realisierung einer Messwelle 3, wie in Figuren 2a und 2b dargestellt, kann die radiale Breite der Stege 11, 13 aufgrund dessen, dass keine Bohrung 12, 14 vorzusehen ist, dünn ausgeführt sein, vorzugsweise zwischen etwa 1 mm und 5 mm, insbesondere mit etwa 3 mm, radialer Breite. In Umfangsrichtung können die Stege 11, 13 0,5 cm bis 1,5 cm, vorzugsweise etwa 1 cm, stark sein, wobei sicherzustellen ist, dass eine ausreichende Materialstärke zur Bereitstellung einer ausreichenden Steifigkeit für eine hohe Messgenauigkeit vorhanden ist, wobei jedoch gleichzeitig die Breite in Umfangsrichtung möglichst kleingehalten werden soll, um den Messbereich nicht unnötig zu beinträchtigen.

Der Freiraum 21 ist vorzugsweise wenigstens 5 mm im Durchmesser, um die ortsfeste Winkelsensorkomponente 5b und/oder die messwellenfeste Winkelsensorkomponente 5a, aufnehmen zu können. Vorzugsweise ist der Freiraum größer als 8 mm im Durchmesser und/oder kleiner als 2 cm im Durchmesser.

Die in der vorstehenden Beschreibung, den Figuren und den Ansprüchen offenbarten Merkmale können sowohl einzeln als auch in beliebiger Kombination für die Realisierung der Erfindung in verschiedenen Ausgestaltungen von Bedeutung sein.

### Bezugszeichenliste

- 1: Positionssensor
- 2: Gehäuse
- 3: Messwelle
- 5: Winkelsensor
- 5a, 5b: Winkelsensorkomponente
- 7,9: Positionsmelder
- 7a, 7b, 9a, 9b: Positionsmelderkomponente
- 8: mittlerer Messwellenabschnitt
- 10: Kronenflansch
- 11, 13: Steg
- 12, 14: Bohrung
- 15: erster Messwellenabschnitt
- 16: Stirnende
- 17: zweiter Messwellenabschnitt
- 18, 19: Montageschraube
- 20: Befestigungsflansch
- 21: Freiraum
- 22: Kupplung
- 23: Hebel
- 24: Stift
- 25: Platine
- 31, 32, 33: Öffnung
- 41: Brücke
- 43: Zunge
- 44, 45: Brückenfuß
- 51: Gleitlagerung
- 53: Gehäuseöffnung
- 55: Dichtung
- 57: Gehäusevorderseite
- 71, 91: Halterung
- 73, 93: Stellring
- 97: Befestigungsschraube

- A: Axialrichtung
- R: Radialabstand
- W: Rotationsachse

## Patentansprüche

1. Positionssensor (1) für ein Stellgerät, wie ein Stellventil, einer prozesstechnischen Anlage, beispielsweise eine chemische Anlage, ein Kraftwerk oder dergleichen, mit
einer um weniger als 360° um eine Schwenkachse (W) schwenkbaren Messwelle (3) und einem Winkelsensor (5) zum Ermitteln einer IST-Winkelstellung der Messwelle (3) relativ zu einer ortsfesten Referenzstelle,
wobei die Messwelle (3) umfasst:
einen ersten Messwellenabschnitt (15) zum Einleiten einer Drehbewegung in die Messwelle (1) entsprechend einer Stellbewegung einer Stellantriebsstange oder -welle, der sich koaxial zur Schwenkachse (W) erstreckt,
einen zweiten, insbesondere sich koaxial zur Schwenkachse (W) erstreckenden, Messwellenabschnitt (17), an dem eine messwellenfeste Winkelsensorkomponente, wie ein Permanentmagnet (5a), des Winkelsensors (5) befestigt ist, und
wenigstens einen sich exzentrisch zur Schwenkachse (W) in Axialrichtung (A) ersteckenden Steg (11, 13), der in Axialrichtung (A) zwischen dem ersten Messwellenabschnitt (15) und dem zweiten Messwellenabschnitt (17) angeordnet ist und die Messwellenabschnitte (15, 17) drehfest verbindet, und
einen in Axialrichtung (A) zwischen den Messwellenabschnitten (15, 17) und in Radialrichtung (Q) auf Höhe der Schwenkachse (W) angeordneten, vorzugsweise zylindrischen, Freiraum (21), in dem der Winkelsensor (5) zumindest zum Teil angeordnet ist, wobei der wenigstens eine exzentrische Steg (11, 13) Zugriff auf den Freiraum (21) in einer Radialrichtung (Q) quer zur Axialrichtung (A) zulässt.

2. Positionssensor (1) nach Anspruch 1, **gekennzeichnet durch** einen Sensorträger, wie eine Platine (25), an dem eine, vorzugsweise relativ zu einem Gehäuse (2) des Positionssensors, ortsfeste Winkelsensorkomponente (5b) des Winkelsensors (5) befestigt ist, wobei der Sensorträger sich quer zur Schwenkachse (W) erstreckt und in Radialrichtung (Q) in den Freiraum (21) ragt und/oder wenigstens eine, vorzugsweise sichelförmige oder U-förmige, Öffnung (31, 33) aufweist, durch die der wenigstens eine exzentrische Steg (11, 13) ragt.

3. Positionssensor (1) nach Anspruch 2, **dadurch gekennzeichnet, dass** der Sensorträger eine Brücke (41) oder eine Zunge (43) aufweist, die von der wenigstens einen Öffnung (31, 33) zumindest teilweise begrenzt ist, wobei die Brücke (41) oder Zunge (43) die ortsfeste, insbesondere gehäusefeste, Winkelsensorkomponente (5b), vorzugsweise auf der Schwenkachse (W) der Messwelle (3) angeordnet, trägt.

4. Positionssensor (1) nach einem der vorstehenden Ansprüche,
**gekennzeichnet durch** einen IST-Winkelstellungs-Messbereich von wenigstens 30°, vorzugsweise wenigstens 60°, insbesondere wenigstens 80°, und/oder weniger als 360°, vorzugsweise höchstens 270°, insbesondere höchstens 180°, höchstens 120° oder höchstens 90°.

5. Positionssensor (1) nach einem der vorstehenden Ansprüche,
**dadurch gekennzeichnet, dass** an der Messwelle (3), vorzugsweise dem zweiten insbesondere koaxialen Messwellenabschnitt (17), eine messwellenfeste Positionsmelderkomponente (7a, 7b) eines Positionsmelders (7, 9) zum Erkennen, ob die IST-Winlcelstellung der Messwelle (3) einer vorbestimmten Winkelstellung entspricht, angeordnet ist.

6. Positionssensor (1) nach einem der vorstehenden Ansprüche,
**dadurch gekennzeichnet, dass** der erste koaxiale Messwellenabschnitt (15) und der exzentrische Steg (11, 13) sowie gegebenenfalls der zweite zur Schwenkachse (W) vorzugsweise koaxiale Messwellenabschnitt (17) einstückig realisiert sind, oder dass der erste koaxiale Messwellenabschnitt (15), der zweite vorzugsweise koaxiale Messwellenabschnitt (17) und/oder der wenigstens eine exzentrischen Steg (11, 13) durch mehrere lösbar miteinander verbundene Einzelteile gebildet sind.

7. Positionssensor (1) nach einem der vorstehenden
Ansprüche, **gekennzeichnet durch**
einen vorzugsweise auf der Rotationsache (W) der Messwelle (3) angeordneten Winkelsensor (5) zum Ermitteln einer IST-Winkelstellung der Messwelle (3) relativ zu einer Referenzstelle, insbesondere zu einem Gehäuse (2) des Positionssensors (1), der eine relativ zur Messwelle (3) drehfeste Winkelsensorkomponente, wie ein Permanentmagnet (5a), und eine relativ zur Referenzstelle, insbesondere zum Gehäuse (2), ortsfeste Winkelsensorkomponente, wie ein AMR-Sensor (5b) aufweist; und
wenigstens einen Positionsmelder (7, 9) zum Erkennen, ob die IST-Winkelstellung der Messwelle (3) einer vorbestimmten Winkelstellung entspricht, wobei der Positionsmelder (7, 9) eine relativ zur Messwelle (3) drehfeste, insbesondere exzentrisch zu der Schwenkachse (W) angeordnete, Positionsmelderkomponente, wie eine Schaltfahne (7a, 9a), und eine relativ zur Referenzstelle, insbesondere zum Gehäuse (2), ortsfeste Positionsmelderkomponente, wie ein Schalter (7b, 9b), aufweist.

8. Positionssensor (1) nach Anspruch 7, bei dem die Messwelle (3), insbesondere der erste Messwellenabschnitt (15), einen Kupplungsabschnitt (22) zum Einleiten einer Drehbewegung um die Schwenkachse (W) der Messwelle (3) aufweist, die zu einer Stellbewegung einer Stellantriebsstange oder -welle des Stellgeräts korrespondiert, **dadurch gekennzeichnet, dass** die messwellenfeste Winkelsensorkomponente (5a) in Axialrichtung (A) zwischen dem Kupplungsabschnitt (23) und dem wenigstens einen Positionsmelder (7, 9) angeordnet ist.

9. Stellgerät, wie ein Stellventil, zum Einstellen einer Prozessfluidströmung einer prozesstechnischen Anlage, wie eine chemischen Anlage, ein Kraftwerk oder dergleichen, mit einem Positionssensor nach einem der vorstehenden Ansprüche, **dadurch gekennzeichnet, dass** der Positionssensor (1) dazu eingerichtet ist, dass die Messwelle eine Drehbewegung korrespondierend zu einer Stellbewegung einer Stellantriebsstange oder -welle des Stellgeräts zu vollführen vermag.

10. Stellgerät nach Anspruch 9, **dadurch gekennzeichnet, dass** der Positionssensor (1) einen Positionsmelder (7, 9) umfasst, der eingerichtet ist zum Erkennen einer vorbestimmten Winkelstellung der Messwelle (3) die zu einer, vorzugsweise das Stellgerät vollständig öffnenden und/oder vollständig schließenden, Endstellung der Stellantriebsstange oder -welle korrespondiert.

## Claims

1. Position sensor (1) for an actuator, such as a control valve, of a processing plant, such as a chemical plant, a power plant or the like, having a measuring shaft (3) capable of pivoting less than 360° around a pivot axis (W), and an angle sensor (5) for detecting an actual angular position of the measuring shaft (3) relative to a stationary reference point,
wherein the measuring shaft (3) comprises:
a first section of the measuring shaft (15) extending coaxially to the pivot axis (W) for introducing a pivotal movement to the measuring shaft (1) corresponding to a control movement of an actuator rod or -shaft,
a second section of the measuring shaft (17) particularly extending coaxially to the pivot axis (W), to which a measuring shaft-based angle sensor component, such as a permanent magnet (5a), of the angle sensor (5) is attached, and
at least one bar (11, 13) extending eccentrically relative to the pivot axis (W), in an axial direction (A), and arranged between the first section of the measuring shaft (15) and the second section of the measuring shaft (17) in the axial direction (A), and connecting the sections of the measuring shaft (15, 17) rotationally fixed, and
a particularly cylindrical free space (21) which is arranged between the sections of the measuring shaft (15, 17) in the axial direction (A), and at the level of the pivot axis (W) in a radial direction (Q), wherein the angle sensor (5) is arranged at least partially in the free space (21), wherein the at least one eccentric bar (11, 13) enables access to the free space (21) in the radial direction (Q) transverse relative to the axial direction (A).

2. Position sensor (1) according to claim 1, **characterized by** a sensor carrier, such as a circuit board (25), to which a stationary angle sensor component (5b) of the angle sensor (5) is attached, particularly being stationary relative to a housing (2) of the position sensor, wherein the sensor carrier extends transverse to the pivot axis (W) and protrudes into the free space (21) in radial direction (Q), and/or comprises at least one, particularly sickle- or U-shaped, opening (31, 33) through which the at least one eccentric bar (11, 13) protrudes.

3. Position sensor (1) according to claim 2, **characterized in that** the sensor carrier comprises a bridge (41) or tongue (43) being at least partially confined by the at least one opening (31, 33), wherein the bridge (41) or tongue (43) carries the stationary angle sensor component (5b), particularly being housing-based, particularly being arranged on the pivot axis (W) of the measuring shaft (3).

4. Position sensor (1) according to one of the preceding claims, **characterized by** a measuring range for the actual angular position of at least 30°, preferably at least 60°, particularly at least 80°, and/or less than 360°, preferably at most 270°, particularly at most 180°, at most 120°, or at most 90°.

5. Position sensor (1) according to one of the preceding claims, **characterized in that** a measuring shaft-based position detector component (7a, 7b) of a position detector (7, 9), for detecting whether an actual angular position of the measuring shaft (3) corresponds to a predetermined angular position, is arranged at the measuring shaft (3), preferably at the second particularly coaxial section of the measuring shaft (17).

6. Position sensor (1) according to one of the preceding claims, **characterized in that** the first coaxial section of the measuring shaft (15) and the eccentric bar (11, 13) and, where appropriate, the second section of the measuring shaft (17), which is particularly coaxial to the pivot axis (W), are realized integrally, or **in that** the first coaxial section of the measuring shaft (15), the second particularly coaxial section of the measuring shaft (17), and/or the at least one eccentric bar (11, 13) are formed by several detachably connected components.

7. Position sensor (1) according to one of the preceding claims, **characterized by** an angle sensor (5) for detecting an actual angular position of the measuring shaft (3) relative to a reference point, the angle sensor (5) particularly being arranged on the rotation axis (W) of the measuring shaft (3), particularly to a housing (2) of the position sensor (1), comprising a rotationally fixed angle sensor component, such as a permanent magnet (5a), being rotationally fixed relative to the measuring shaft (3), and a stationary angle sensor component, such as an AMR-sensor, being stationary relative to the reference point, particularly to the housing (2); and
at least a position detector (7, 9) for detecting whether the actual angular position of the measuring shaft (3) corresponds to a predetermined angular position, wherein the position detector (7, 9) comprises a rotationally fixed position detector component, rotationally fixed relative to the measuring shaft (3), such as a switch flag (7a, 9a), particularly eccentrically arranged to the pivot axis (W), and a stationary position detector component, being stationary relative to the reference point, particularly to the housing (2), such as a switch (7b, 9b).

8. Position sensor (1) according to claim 7, the measuring shaft (3), particularly the first section of the measuring shaft (15), comprising a coupling section (22) for initiating a pivotal movement around the pivot axis (W) of the measuring shaft (3) corresponding to a control movement of an actuator bar or -shaft of the actuator, **characterized in that** the measuring shaft-based angle sensor component (5a) is arranged between the coupling section (22) and the at least one position indicator (7, 9) in axial direction (A).

9. Actuator, such as a control valve, for controlling a process fluid flow of a processing plant, such as a chemical plant, a power plant or the like, with a position sensor according to one of the preceding claims, **characterized in that** the position sensor (1) is configured such that the measuring shaft (3) can perform a pivotal movement corresponding to a control movement of an actuator bar or -shaft of the actuator.

10. Actuator according to claim 9, **characterized in that** the position sensor (1) comprises a position detector (7, 9) configured to detect a predetermined angular position of the measuring shaft (3), which corresponds to an end position of the actuator bar or -shaft, particularly completely opening and/or completely closing the actuator.

## Revendications

1. Détecteur de position (1) pour un dispositif de réglage, tel qu'une soupape de réglage, d'une installation industrielle, par exemple une installation chimique, une centrale électrique ou autre, avec un arbre de mesure (3) apte à pivoter de moins de 360° autour d'un axe de pivotement (W) et un détecteur d'angle (5) destiné à déterminer une position angulaire réelle de l'arbre de mesure (3) par rapport à un point de référence fixe,
dans lequel l'arbre de mesure (3) comporte :
une première section d'arbre de mesure (15) destinée à induire un mouvement de rotation dans l'arbre de mesure (3) en fonction d'un mouvement de réglage d'une barre ou d'un arbre d'actionneur, lequel/laquelle s'étend coaxialement à l'axe de pivotement (W),
une deuxième section d'arbre de mesure (17) s'étendant en particulier coaxialement à l'axe de pivotement (W), sur laquelle est fixé un composant de détecteur d'angle solidaire de l'arbre de mesure, tel qu'un aimant permanent (5a), du détecteur d'angle (5), et
au moins une âme (11, 13) s'étendant de façon excentrée par rapport à l'axe de pivotement (W) dans la direction axiale (A), laquelle est disposée entre la première section d'arbre de mesure (15) et la deuxième section d'arbre de mesure (17) dans la direction axiale (A) et relie les sections d'arbre de mesure (15, 17) de manière solidaire en rotation, et
un espace libre (21), de préférence cylindrique, disposé entre les sections d'arbre de mesure (15, 17) dans la direction axiale (A) et à la hauteur de l'axe de pivotement (W) dans la direction radiale (Q), dans lequel le détecteur d'angle (5) est au moins partiellement disposé, l'au moins une âme excentrée (11, 13) permettant d'accéder à l'espace libre (21) dans une direction radiale (Q) perpendiculaire à la direction axiale (A).

2. Détecteur de position (1) selon la revendication 1, **caractérisé par** un support de détecteur, tel qu'une platine (25), sur lequel est fixé un composant de détecteur d'angle (5b) du détecteur d'angle (5), de préférence solidaire d'un boîtier (2) du détecteur de position, dans lequel le support de détecteur s'étend perpendiculairement à l'axe de pivotement (W) et fait saillie dans l'espace libre (21) dans la direction radiale (Q) et/ou présente au moins une ouverture (31, 33), de préférence en forme de croissant ou en forme de U, à travers laquelle l'au moins une âme excentrée (11, 13) fait saillie.

3. Détecteur de position (1) selon la revendication 2, **caractérisé en ce que** le support de détecteur présente un pont (41) ou une langue (43), lequel/laquelle est au moins partiellement délimité(e) par au moins une ouverture (31, 33), dans lequel le pont (41) ou la langue (43) porte le composant de détecteur d'angle (5b) fixe, en particulier solidaire du boîtier, de préférence disposé sur l'axe de pivotement (W) de l'arbre de mesure (3).

4. Détecteur de position (1) selon l'une des revendications précédentes,
**caractérisé par** une plage de mesure de position angulaire réelle d'au moins 30°, de préférence d'au moins 60°, en particulier d'au moins 80°, et/ou inférieure à 360°, de préférence de 270° maximum, en particulier de 180° maximum, de 120° maximum ou de 90° maximum.

5. Détecteur de position (1) selon l'une des revendications précédentes,
**caractérisé en ce que** sur l'arbre de mesure (3), de préférence sur la deuxième section d'arbre de mesure (17) en particulier coaxiale, il est prévu un composant d'indicateur de position (7a, 7b) solidaire de l'arbre de mesure d'un indicateur de position (7, 9), destiné à reconnaître si la position angulaire réelle de l'arbre de mesure (3) correspond à une position angulaire prédéfinie.

6. Détecteur de position (1) selon l'une des revendications précédentes,
**caractérisé en ce que** la première section d'arbre de mesure (15) coaxiale et l'âme excentrée (11, 13) ainsi qu'éventuellement la deuxième section d'arbre de mesure (17) de préférence coaxiale à l'axe de pivotement (W) sont réalisées d'une seule pièce, ou **en ce que** la première section d'arbre de mesure (15) coaxiale, la deuxième section d'arbre de mesure (17) de préférence coaxiale et/ou l'au moins une âme excentrée (11, 13) sont constituées de plusieurs pièces individuelles reliées entre elles de façon détachable.

7. Détecteur de position (1) selon l'une des revendications précédentes, **caractérisé par**
un détecteur d'angle (5) disposé de préférence sur l'axe de rotation (W) de l'arbre de mesure (3), pour la détermination d'une position angulaire réelle de l'arbre de mesure (3) par rapport à un point de référence, en particulier à un boîtier (2) du détecteur de position (1), lequel présente un composant de détecteur d'angle solidaire en rotation par rapport à l'arbre de mesure (3), tel qu'un aimant permanent (5a), et un composant de détecteur d'angle solidaire du point de référence, en particulier du boîtier (2), tel qu'un détecteur AMR (5b) ; et
au moins un indicateur de position (7, 9) destiné à reconnaître si la position angulaire réelle de l'arbre de mesure (3) correspond à une position angulaire prédéfinie, dans lequel l'indicateur de position (7, 9) présente un composant d'indicateur de position solidaire en rotation de l'arbre de mesure (3), disposé en particulier de façon excentrée par rapport à l'axe de pivotement (W), tel qu'un drapeau de commutation (7a, 9a), et un composant d'indicateur de position solidaire du point de référence, en particulier du boîtier (2), tel qu'un commutateur (7b, 9b).

8. Détecteur de position (1) selon la revendication 7, dans lequel l'arbre de mesure (3), en particulier la première section d'arbre de mesure (15), présente une section d'accouplement (22) destinée à induire un mouvement de rotation autour de l'axe de pivotement (W) de l'arbre de mesure (3), correspondant à un mouvement de réglage d'une barre ou d'un arbre d'actionneur du dispositif de réglage,
**caractérisé en ce que** le composant de détecteur d'angle solidaire de l'arbre de mesure (5a) est disposé entre la section d'accouplement (23) et l'au moins un indicateur de position (7, 9) dans la direction axiale (A).

9. Dispositif de réglage, tel qu'une soupape de réglage, pour le réglage d'un écoulement de fluide de processus d'une installation industrielle, telle qu'une installation chimique, une centrale électrique ou autre, avec un détecteur de position selon l'une des revendications précédentes, **caractérisé en ce que** le détecteur de position (1) est conçu de telle façon que l'arbre de mesure effectue un mouvement de rotation correspondant à un mouvement de réglage d'une barre ou d'un arbre d'actionneur du dispositif de réglage.

10. Dispositif de réglage selon la revendication 9, **caractérisé en ce que** le détecteur de position (1) comporte un indicateur de position (7, 9) conçu pour reconnaître une position angulaire prédéfinie de l'arbre de mesure (3) correspondant à une position finale de la barre ou de l'arbre d'actionneur, ouvrant de préférence complètement et/ou fermant complètement le dispositif de réglage.
